# EUROPEAN PATENT SPECIFICATION

(11) **EP 0 453 041 B1**
(45) Date of publication and mention of the grant of the patent: **14.12.1994**
(21) Application number: 91200894.3
(22) Date of filing: 16.04.1991
(51) Int. Cl.: B65G 27/12, B65G 27/08

(54) **Jigging conveyor**
Schwingförderer
Glissière oscillante

(30) Priority: 17.04.1990 NL 9000894
(43) Date of publication of application: 23.10.1991
(73) Proprietor: Bas Systemen B.V., NL-6241 NE Bunde (NL)
(72) Inventor: Vluggen, Johannes Elisabeth Jozef, NL-6467 EV Kerkrade (NL)
(74) Representative: Van kan, Johan Joseph Hubert, Ir.

(56) References cited:
- EP-A- 0 136 446
- DE-A- 1 583 492
- FR-A- 2 156 462
- FR-A- 2 379 454

## Description

The invention relates to a device for moving objects such as a jigging conveyor, said device being provided with a frame and with a conveying means supported by said frame, said conveying means being rectilinearly movable to and fro with respect to the frame and parallel to itself, whereby the conveying means is coupled to a spring mechanism, whilst a drive means is provided, with the aid of which the conveying means is movable in a first direction against the action of the spring mechanism, whilst the conveying means is movable in a direction opposite said first direction by means of the spring mechanism.

When such a device is used the conveying means and the objects present therein will be moved comparatively slowly in a first direction, against the action of the spring mechanism, by means of the drive means, whilst subsequently the conveying means will be moved in an opposite direction, at comparatively great speed, by the spring mechanism, which will result in a movement of the objects in a direction opposite said first direction.

Such devices are known e.g. from British Patent Specification No. 148,844 and French Patent Specification No. 2,379,454, wherein the drive means comprises an eccentric or cam, which acts on a roller connected to the conveying means. The cam or the eccentric is thereby rotated by means of a motor or the like. This known construction is comparatively heavy and complicated, very liable to wear and produces a great deal of noise.

From German Patent Application No. 1,583,492 a similar device is known, wherein the conveying means is coupled to a counterweight via a lever system and via springs. Said counterweight is thereby moved by means of a hydraulic setting cylinder. Also the construction of such a structure is comparatively complicated and very liable to wear, whilst it cannot be avoided that noise is produced. The hydraulic setting cylinder must be of a type which can be retracted very fast, which leads to a special construction of the setting cylinder, which is cost-increasing.

The object of the invention is to obtain a device of the above kind, wherein the drawbacks of the known devices can be avoided.

According to the invention this can be achieved in that the drive means is formed by a lifting magnet, which has been arranged in line with the conveying means, whereby an armature of the lifting magnet is connected to a shaft projecting on either side from the casing of the lifting magnet, which shaft is at one end connected to the conveying means, whilst the other end is connected to the spring mechanism.

By using the construction according to the invention a simple and compact construction of the drive means formed by the lifting magnet can be obtained, whereby the amplitude and the frequency of the conveying means can be controlled in a simple manner by means of suitable control electronics. Furthermore the construction of the drive means will be substantially sensitive to wear, whilst no undesirable noise will be produced during normal use.

Further the structure of the conveying means can be chosen independently of the drive means.

The invention will be explained in more detail hereafter, with reference to a possible embodiment of a device according to the invention diagrammatically illustrated in the accompanying Figures.

Figure 1 is a diagrammatic perspective view of a device according to the invention, showing the various parts spaced from each other.

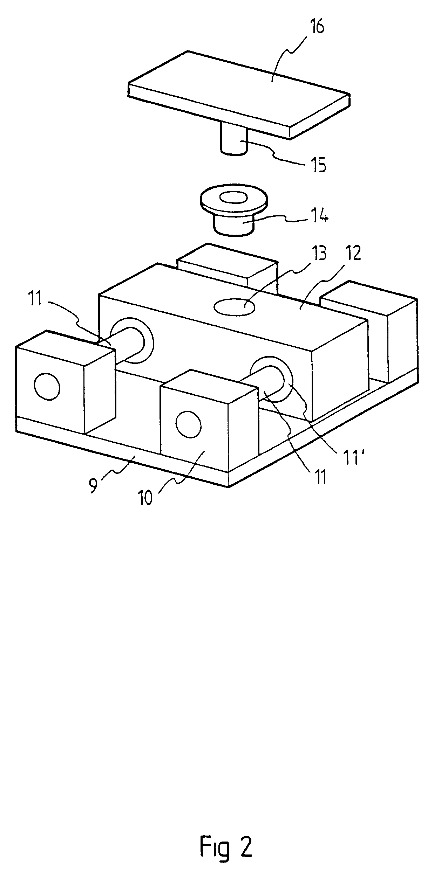

Figure 2 is a diagrammatic perspective view of means for supporting a conveying means in a supporting frame.

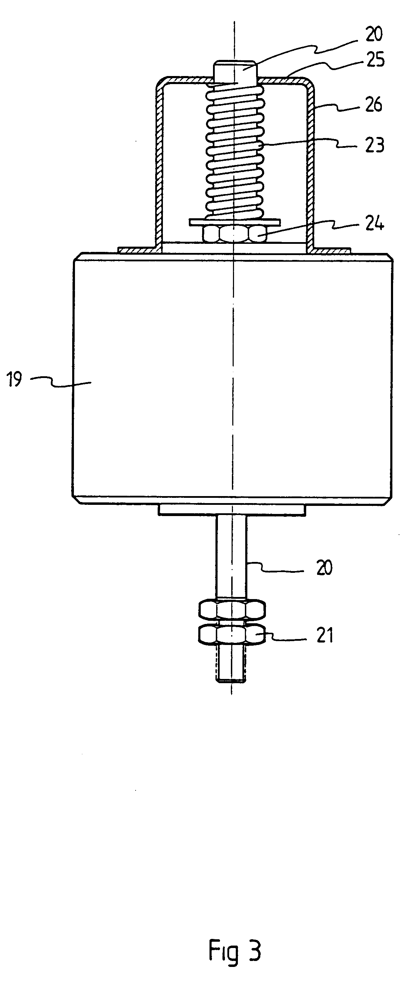

Figure 3 is a diagrammatic view, partly in elevation and partly in section, of the drive mechanism for the conveying means in combination with the spring mechanism.

Figure 4 is a diagrammatic side elevational view of the device according to the invention in a first operating position.

Figure 5 is an elevational view, corresponding with Figure 4, of the device in another operating position.

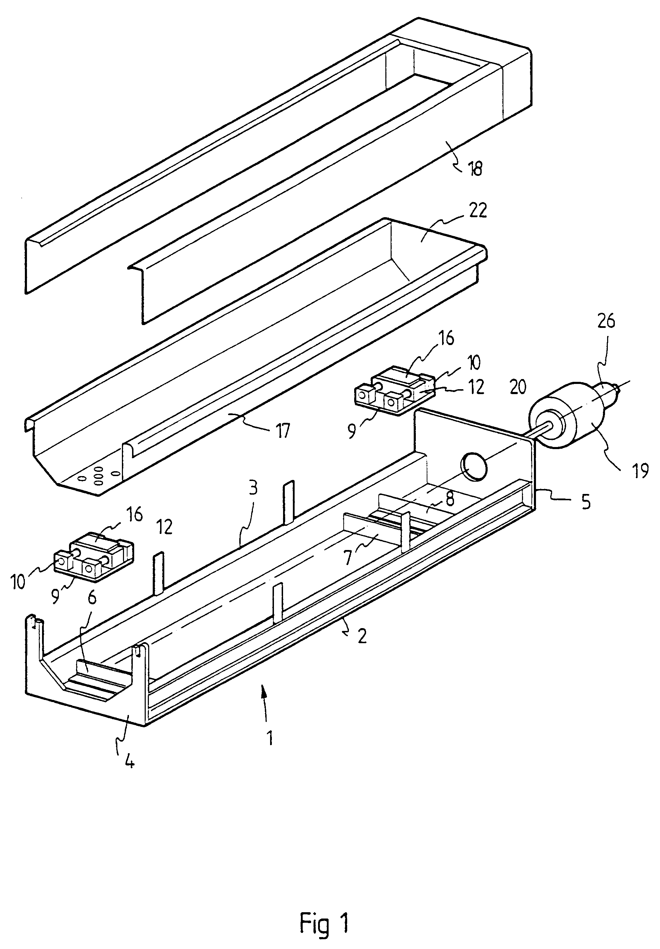

The device illustrated in Figure 1 comprises a supporting frame 1, which is inter alia provided with two longitudinal beams 2 and 3, said beams at their ends being interconnected by transverse partitions 4 and 5 respectively.

Between the transverse partitions there are furthermore provided cross beams 6 - 8.

Between the partition 4 and the cross beam 6, or between the cross beams 7 and 8, as the case may be, mounting plates 9 may be provided. Axle bearings 10 are provided in the four corner points of each mounting plate 9, said axle bearings on each mounting plate 9 supporting a pair of shafts 11 extending parallel to each other and to the frame beams 2 and 3.

A sliding block 12 is movably journal led on each pair of shafts 11, with the interposition of guide bushes 11' containing balls. In the centre of a sliding block 12 a bore 13 is provided, whose central axis intersects the central axes of the shafts 11 perpendicularly. A pin 15 is freely rotatably accommodated in said bore, with the interposition of a plain bearing 14. Said pin 15 is secured to the bottom of a supporting plate 16.

A U-shaped conveying means 17 is secured to the two supporting plates 16. Said securing should thereby take place in such a manner that the bottom of the U-shaped conveying means 17, on which the objects to be moved will rest during operation, will be smooth and will have no projecting bolt heads or the like.

The upright longitudinal edges of the U-shaped conveying means 17 will be covered by a protective casing 18 mounted on the supporting frame 1.

To the transverse partition 5, at the side of said partition remote from the conveying means 17, there is secured the casing 19 of a lifting magnet known per se. A shaft 20 projecting on either side from said casing 19 is mounted on the armature of the lifting magnet, which is accommodated in said casing. One end of said shaft is provided with screw thread, on which nuts 21 are provided, by means of which the shaft 20 is secured to an end partition 22 of the U-shaped conveying means 17.

The other end of the shaft 20 is surrounded by a coil spring 23, which is retained between a nut 24 provided on the shaft 20 and an end wall 25 of a cover 26 mounted on the casing 19.

The operation of the above-described device is as follows.

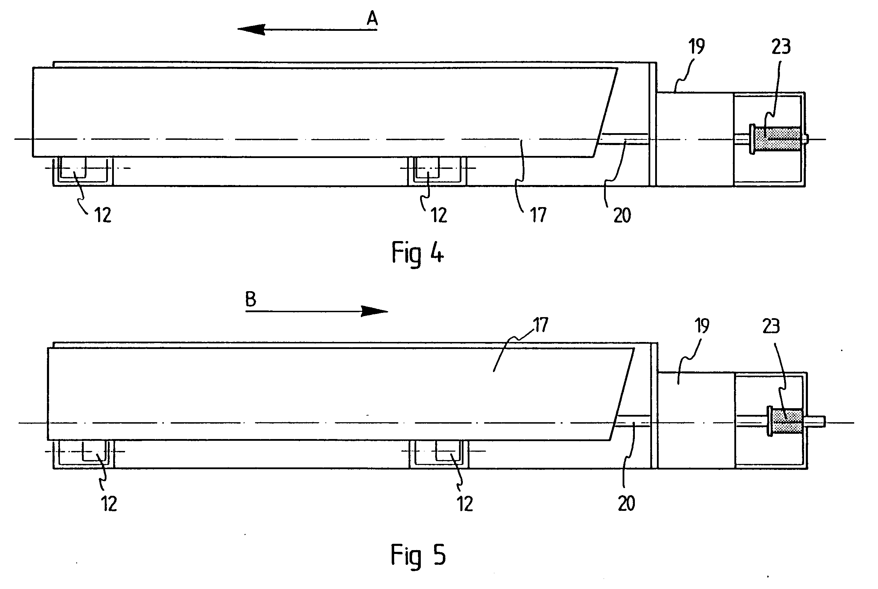

Starting from a position in which the spring 23 is tensioned, and kept in its tensioned position by means of the excited lifting magnet 19, the spring 23 will suddenly extend when the excitation of the lifting magnet is released, as a result of which the shaft 20 will be moved, together with the U-shaped conveying means 17 connected thereto and any object(s) present in said U-shaped conveying means, in the direction according to the arrow A, when seen in Figure 4. By re-activating the lifting magnet 19 at a certain moment the movement of the U-shaped conveying means will be reversed and the U-shaped conveying means will be moved in the direction according to the arrow B, whilst at the same time the spring 23 is tensioned again. As a result of the mass inertia the objects present in the U-shaped conveying means will at least initially continue to move in the direction according to the arrow A, and thus remain behind with respect to the conveying means 17. After the conveying means 17 has thus been returned to the position illustrated in Figure 5 the above-described cycle can be repeated again. It will be apparent that in this manner objects present in the conveying means can be gradually moved from the right to the left in the direction according to the arrow A, when seen in Figures 4 and 5.

The device according to the invention can e.g. be successfully used with metal-removing machines, whereby the chips produced when machining objects are deposited in the right-hand end of the U-shaped conveying means 17, near the processing machine, when seen in Figures 4 and 5, and be gradually moved, in the direction according to the arrow A, towards the other end of the U-shaped conveying means 17. Of course it will also be possible to use a device and method according to the invention for conveying other objects.

Furhtermore modications and/or additions to the above-described embodiment are possible within the scope of the claims. The conveying means 18 may of course be adapted to the shape and dimensions of the objects to be moved. Furthermore it will be possible to use a pack of Belleville washers or the like instead of a coil spring 23.

## Claims

1. A jigging conveyor provided with a frame (1) and with a conveying means (17) supported by said frame (1), said conveying means (17) being rectilinearly movable to and fro with respect to the frame (1) and parallel to itself, the conveying means (17) being coupled to a spring mechanism (23), whilst a drive means (19) is provided in line with the conveying means (17) for moving the conveying means (17) in a first direction against the force of the spring mechanism (23), whilst the conveying means (17) is movable in a direction opposite said first direction by means of the spring mechanism (23), characterised in that said drive means (19) is a lifting magnet the armature of the lifting magnet (19) being connected to a shaft (20) projecting on either side from the casing of the lifting magnet (19), which shaft (20) is at one end connected to the conveying means (17), whilst the other end is connected to the spring mechanism (23).

2. A device according to claim 1, characterised in that said spring mechanism (23) comprises spring means (23) surrounding the shaft (20) of the lifting magnet (19).

3. A device according to claim 1 or 2, characterised in that said conveying means (17) is formed by a conveyor chute, which is movably supported by shafts (11) extending in the longitudinal direction of said conveyor chute (17).

## Patentansprüche

1. Schwingförderer mit einem Rahmen (1) und mit einer Fördereinrichtung (17), welche durch den Rahmen (1) abgestützt ist, welche geradlinig bezüglich des Rahmens (1) vor und zurück und parallel zu sich selbst bewegbar ist, und welche mit einem Federmechanismus (23) verbunden ist, wobei eine Antriebseinrichtung (19) in Ausrichtung mit der Fördereinrichtung (17) zum Bewegen der Fördereinrichtung (17) in einer ersten Richtung gegen die Kraft des Federmechanismus (23) vorgesehen ist, wobei die Fördereinrichtung (17) in einer Richtung entgegengesetzt zu der ersten Richtung mittels des Federmechanismus (23) bewegbar ist,
**dadurch gekennzeichnet, daß**
die Antriebseinrichtung (19) ein Hubmagnet ist, dessen Anker mit einer Welle (20) verbunden ist, die von jede Seite von dem Gehäuse des Hubmagneten (19) vorsteht, wobei die Welle (20) an einem Ende mit der Fördereinrichtung (17) verbunden ist, während das andere Ende mit dem Federmechanismus (23) verbunden ist.

2. Vorrichtung nach Anspruch 1, dadurch gekennzeichnet, daß der Federmechanismus (23) eine Federeinrichtung (23) aufweist, welche die Welle (20) des Hubmagneten (19) umgibt.

3. Vorrichtung nach Anspruch 1 oder 2, dadurch gekennzeichnet, daß die Fördereinrichtung (17) durch eine Förderrinne gebildet ist, welche durch Wellen (11) bewegbar abgestützt ist, die sich in Längsrichtung der Förderrutsche (17) erstrecken.

## Revendications

1. Glissière oscillante munie d'un bâti (1) et d'un moyen de transport (17) supporté par ledit bâti (1), ledit moyen de transport (17) étant mobile de manière rectiligne et alternative par rapport au bâti (1) et parallèlement à lui-même, le moyen de transport (17) étant couplé à un mécanisme à ressort (23), tandis qu'un moyen d'entraînement (19) est prévu dans l'axe du moyen de transport (17) pour faire déplacer le moyen de transport (17) dans une première direction contre la force du mécanisme à ressort (23), tandis que le moyen de transport (17) peut être déplacé dans une direction opposée à ladite première direction au moyen du mécanisme à ressort (23), caractérisé en ce que ledit moyen d'entraînement (19) est un aimant de levage, l'armature de l'aimant de levage (19) étant reliée à un arbre (20) dépassant de chaque côté du boîtier de l'aimant de levage (19), ledit arbre (20) est relié à une extrémité au moyen de transport (17), tandis que l'autre extrémité est reliée au mécanisme à ressort (23).

2. Dispositif selon la revendication 1, caractérisé en ce que ledit mécanisme à ressort (23) comprend un moyen de ressort (23) entourant l'arbre (20) dudit aimant de levage (19).

3. Dispositif selon la revendication 1 ou 2, caractérisé en ce que ledit moyen de transport (17) est constitué d'une glissière de transport qui est supportée de manière mobile par des arbres (11) disposés dans la direction longitudinale de ladite glissière de transport (17).
